# EUROPEAN PATENT APPLICATION

(11) **EP 4 768 920 A1**
(43) Date of publication of application: **01.07.2026**
(21) Application number: 23949731.6
(22) Date of filing: 22.08.2023
(51) Int. Cl.: G01N 35/02

(54) **CONTAINER INSTALLATION APPARATUS AND CONTAINER**

(71) Applicant: HITACHI HIGH-TECH CORPORATION, Tokyo 105-6409 (JP)
(72) Inventor: HOKARI Junpei, Tokyo 100-8280 (JP); YAMAGATA Toshiki, Tokyo 105-6409 (JP); SHIBAHARA Masashi, Tokyo 105-6409 (JP)
(74) Representative: MERH-IP Matias Erny Reichl Hoffmann Patentanwälte PartG mbB
(86) International application number: PCT/JP2023/030179
(87) International publication number: WO 2025/041270

(57) **Abstract**

A container installation apparatus (10) includes: an installation section (11) which installs a plurality of containers (60) each provided with engagement parts (62) in at least left and right side surface portions inside thereof; and a lift (12) that lifts and lowers the container inside the installation section. The installation section includes a plurality of insertion ports (21) that are provided to be opened in a front surface portion and that are used to insert the container into an inside of the installation section, a take-out port (26) that is provided to be opened in a ceiling portion and that is used to take out the container from the inside of the installation section, a holding part (30) with a plurality of stages that is provided in left and right inner wall portions and that horizontally holds the container by engaging with the engagement parts of the container, and an insertion port guide part (22) that is provided to partially block the insertion port and that guides insertion of the container into the insertion port.

## Description

### TECHNICAL FIELD

The present invention relates to a container installation apparatus and a container.

### BACKGROUND ART

There has been conventionally a container installation apparatus in which a plurality of containers storing housed objects such as chips, reagents, or specimens are installed while being stacked one on top of another inside the apparatus, and the containers are lifted and lowered with a lift (for example, see Patent Literature 1). The container installation apparatus described in Patent Literature 1 is used in an automatic analyzer for analyzing test samples, and is configured to lift a plurality of part racks stacked one on top of another, to a rack collection station arranged above the part racks, with the lift.

### CITATION LIST

### Patent Literature

Patent Literature 1: JP2021-529314A

### SUMMARY OF INVENTION

### Technical Problem

As explained below, in the conventional technique disclosed in Patent Literature 1, there are demands for making a foreign object less likely to be mixed into the housed objects and taking out the containers from the apparatus in the installation order.

For example, in the conventional technique, when the a plurality of containers in which housed objects (i.e., contents) such as chips, reagents, or specimens are housed are installed inside the apparatus while being stacked one on top of another, there is a possibility that a top portion of the lower container comes into contact with a bottom surface of the upper container, and a foreign object is mixed into the housed objects in the lower container.

Moreover, in this type of apparatus, there is a demand for performing an operation in which the containers are taken out from the apparatus in installation order and used to preferably manage quality and remaining amounts of the housed objects in the containers. However, in the conventional technique, the apparatus is configured such that the container installed first is arranged in a bottom stage, the container installed last is arranged in a top stage, and the containers are taken out and used in order starting from the last container arranged in the top stage and then to the containers arranged below the last container. Accordingly, in the conventional technique, the containers are installed in order different from desired use order of the containers. Thereby, the operation in which the containers are taken out from the apparatus in installation order and used cannot be performed.

The present invention has been made to solve the problems described above, and a main object is to provide a container installation apparatus and containers used in the container installation apparatus that achieve to prevent a foreign object from being mixed into housed objects in the containers and to improve use order of the containers. **Solution to Problem**

In order to achieve the above object, the present invention is a container installation apparatus including: an installation section which installs a plurality of containers each provided with an engagement part in at least left and right side surface portions inside thereof; and a lift that lifts and lowers the containers inside the installation section. Herein, the installation section is configured to include: a plurality of insertion ports that are provided to be opened in a front surface portion and used to insert the containers into an inside of the installation section, a take-out port that is provided to be opened in a ceiling portion and used to take out the containers from the inside of the installation section, a holding part with a plurality of stages that is provided in left and right inner wall portions and that horizontally holds the container by engaging with the engagement part of the container, and an insertion port guide part that is provided to partially block the insertion port and that guides insertion of the container into the insertion port.

Other means are described later.

### Advantageous Effects of Invention

The present invention can achieve to prevent a foreign object from being mixed into housed objects in containers and to improve use order of the containers.

### BRIEF DESCRIPTION OF DRAWINGS

[FIG. 1] FIG. 1 is a perspective diagram of a container installation apparatus and containers according to an embodiment 1.
[FIG. 2] FIG. 2 is a perspective diagram of the container installation apparatus according to the embodiment 1.
[FIG. 3] FIG. 3 is a perspective diagram of a movable holding part of the container installation apparatus according to the embodiment 1.
[FIG. 4A] FIG. 4A is a perspective diagram of the container viewed from the upper right side.
[FIG. 4B] FIG. 4B is a perspective diagram of the container viewed from the lower right side.
[FIG. 4C] FIG. 4C is a top diagram of the container.
[FIG. 4D] FIG. 4D is a front diagram of the container.
[FIG. 4E] FIG. 4E is a front cross-sectional diagram of the container.
[FIG. 5A] FIG. 5A is a perspective diagram of a container of a modified example viewed from the upper right side.
[FIG. 5B] FIG. 5B is a perspective diagram of the container of the modified example viewed from the lower right side.
[FIG. 6] FIG. 6 is an explanation diagram of a housing state of the container installation apparatus according to the embodiment 1.
[FIG. 7] FIG. 7 is an operation explanation diagram (1) of the container installation apparatus according to the embodiment 1.
[FIG. 8] FIG. 8 is an operation explanation diagram (2) of the container installation apparatus according to the embodiment 1.
[FIG. 9] FIG. 9 is an operation explanation diagram (3) of the container installation apparatus according to the embodiment 1.
[FIG. 10] FIG. 10 is an operation explanation diagram (4) of the container installation apparatus according to the embodiment 1.
[FIG. 11] FIG. 11 is an operation explanation diagram (5) of the container installation apparatus according to the embodiment 1.
[FIG. 12] FIG. 12 is a perspective diagram of a container installation apparatus according to an embodiment 2.
[FIG. 13] FIG. 13 is a front diagram of the container installation apparatus according to the embodiment 2.
[FIG. 14] FIG. 14 is an explanation diagram of the container installation apparatus according to the embodiment 2.
[FIG. 15] FIG. 15 is a perspective diagram of the movable holding part of the container installation apparatus according to the embodiment 2.
[FIG. 16] FIG. 16 is a perspective diagram of a container installation apparatus according to an embodiment 3.
[FIG. 17] FIG. 17 is a front diagram of the container installation apparatus according to the embodiment 3.
[FIG. 18] FIG. 18 is an operation explanation diagram (1) of the container installation apparatus according to the embodiment 3.
[FIG. 19] FIG. 19 is an operation explanation diagram (2) of the container installation apparatus according to the embodiment 3.
[FIG. 20] FIG. 20 is an operation explanation diagram (3) of the container installation apparatus according to the embodiment 3.
[FIG. 21] FIG. 21 is an operation explanation diagram (4) of the container installation apparatus according to the embodiment 3.
[FIG. 22] FIG. 22 is an operation explanation diagram (5) of the container installation apparatus according to the embodiment 3.
[FIG. 23] FIG. 23 is a perspective diagram of a container installation apparatus according to an embodiment 4.
[FIG. 24] FIG. 24 is an operation explanation diagram (1) of the container installation apparatus according to the embodiment 4.
[FIG. 25] FIG. 25 is an operation explanation diagram (2) of the container installation apparatus according to the embodiment 4.
[FIG. 26] FIG. 26 is an operation explanation diagram (3) of the container installation apparatus according to the embodiment 4.

### DESCRIPTION OF EMBODIMENTS

Embodiments of the present inventions (hereinafter, referred to as the present embodiments) are explained below in detail with reference to the drawings. Note that the drawings merely schematically show the invention in such a manner that the invention can be sufficiently understood. Accordingly, the present invention is not limited only to the illustrated examples. Moreover, in the drawings, common components or similar components are denoted by the same reference numerals, and overlapping explanation thereof is omitted.

### [Embodiment 1]

### <Configuration of Container Installation Apparatus>

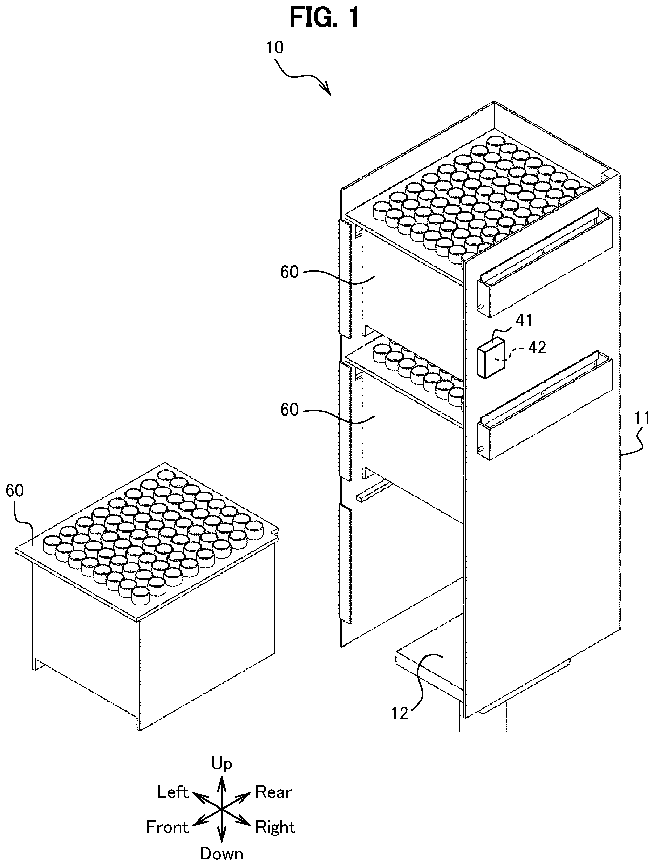

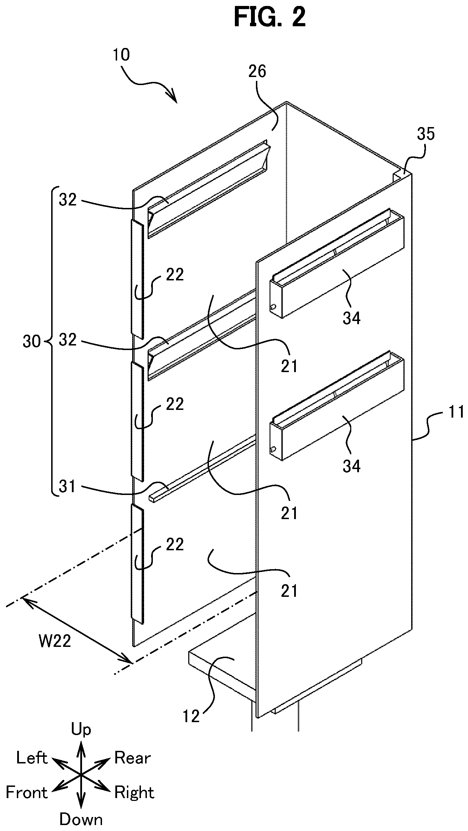

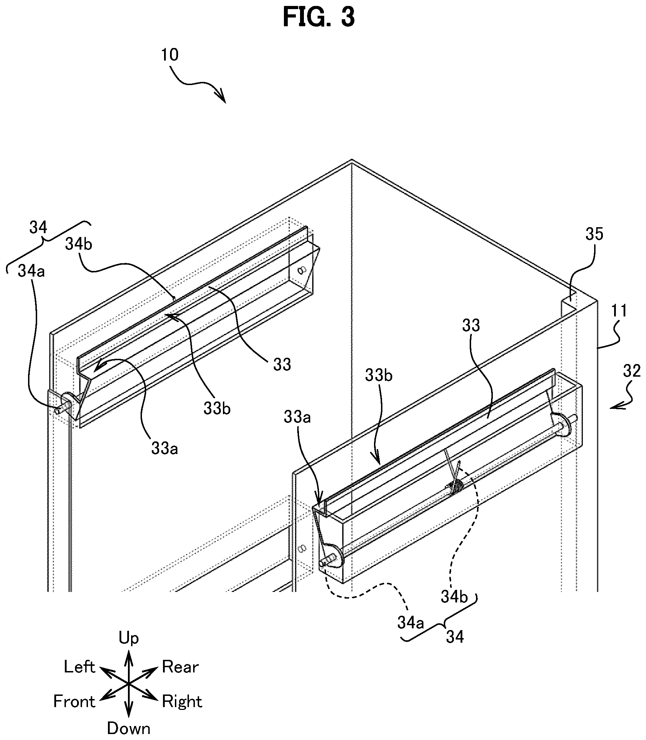

A configuration of a container installation apparatus 10 according to the present embodiment 1 is explained below with refence to FIGs. 1 to 3. FIG. 1 is a perspective diagram of the container installation apparatus 10 and containers 60 according to the present embodiment 1. FIG. 2 is a perspective diagram of the container installation apparatus 10. FIG. 3 is a perspective diagram of a movable holding part of the container installation apparatus 10. In the present embodiment, explanation is given assuming the case where the container installation apparatus 10 is used for a genetic testing apparatus. The genetic testing apparatus is an apparatus which is desired to prevent a foreign object from being mixed into housed objects in the containers and improve use order of the containers.

As shown in FIG. 1, the container installation apparatus 10 according to the present embodiment includes an installation section 11, a lift 12, an operation unit 41, and a control unit 42. Note that, although the operation unit 41 and the control unit 42 are shown in the example shown in FIG. 1, the operation unit 41 and the control unit 42 are omitted in other drawings to explain the configuration and operations of the container installation apparatus 10 so as to be easily understood (i.e., same applies to other embodiments).

The installation section 11 is a component which installs a plurality of containers 60 inside the installation section. The plurality of containers 60 are installed one on top of another in an up-down direction inside the container installation apparatus 10.

The lift 12 is a component that lifts the containers 60 inside the installation section 11.

The operation unit 41 is a component that is operated by a user. For example, the operation unit 41 is used for a start instruction of a lifting-lowering operation of the lift 12.

The control unit 42 is a component that controls operation of each part of the container installation apparatus 10.

In the present embodiment, explanation is given assuming that, when the user inputs the start instruction of the lifting-lowering operation of the lift 12 into the container installation apparatus 10 by operating the operation unit 41, the control unit 42 starts the lifting-lowering operation of the lift 12 in response to this instruction. Note that, in the present embodiment, explanation is given assuming that the operation of the lift 12 is automatically controlled by the control unit 42, and is not stopped when the user stops the operation on the operation unit 41, but is stopped when the lift 12 reaches a predetermined height position, by detecting this reaching with a not-shown sensor or the like.

As shown in FIG. 2, in the present embodiment, the installation section 11 is formed in a ]-shape by performing sheet metal processing (i.e., bending) on a flat-sheet-shaped metal member. In the present embodiment, explanation is given assuming that the installation section 11 is made of a metal material to secure strength. However, the installation section 11 may be made of a resin material or the like as long as sufficient strength can be secured. The installation section 11 includes a plurality of insertion ports 21, a single take-out port 26, a holding part 30 with a plurality of stages, a plurality of insertion port guide parts 22, and an insertion restriction part 35.

The insertion port 21 is an opening portion that is used to insert the container 60 into an inside of the installation section 11. The insertion port 21 is provided to be opened in a front surface portion of the installation section 11. In the present embodiment, explanation is given assuming that three insertion ports 21 are provided in the up-down direction.

The take-out port 26 is an opening portion that is used to take out the container 60 from the inside of the installation section 11. The take-out port 26 is provided to be opened in a ceiling portion of the installation section 11.

The holding part 30 is a component that horizontally holds the containers 60 by engaging with engagement part 62 of the container 60. In the present embodiment, the holding part 30 is formed of sheet-shaped members to have horizontal surfaces. The holding part 30 is provided in left and right inner wall portions of the installation section 11. The holding part 30 holds the containers 60 in a suspended manner when the containers 60 are installed, and cancel the holding when the containers 60 are lifted or lowered by the lift 12. Moreover, after the lifting or lowering of all containers 60 by the lift 12, an open space is formed in the insertion port 21 of the bottom stage, and the next container 60 is additionally inserted into this insertion port 21. Accordingly, the holding part 30 holds this container 60.

The holding part 30 is arranged to protrude from the left and right inner wall portions of the installation section 11 toward the inside of the installation section 11. In the present embodiment, the holding part 30 of the bottom stage among the holding parts 30 with the plurality of stages is formed as a fixed holding part 31 inside the installation section 11. The fixed holding part 31 is formed of flat-sheet-shaped members. Meanwhile, the holding parts 30 with the stages other than the bottom stage are formed as movable holding parts 32 inside the installation section 11 to be movable when the container 60 is lifted with the lifting of the lift 12.

In the present embodiment, two movable holding parts 32 are provided. In the following description, when the two movable holding parts 32 are to be distinguished from each other, the two movable holding parts are respectively referred to as "a movable holding part 32 of the upper stage" and "a movable holding part 32 of the lower stage". The movable holding part 32 includes holding members 33 (FIG. 3) and movable mechanisms 34 for moving the holding members 33. Details of the movable holding parts 32 are described later.

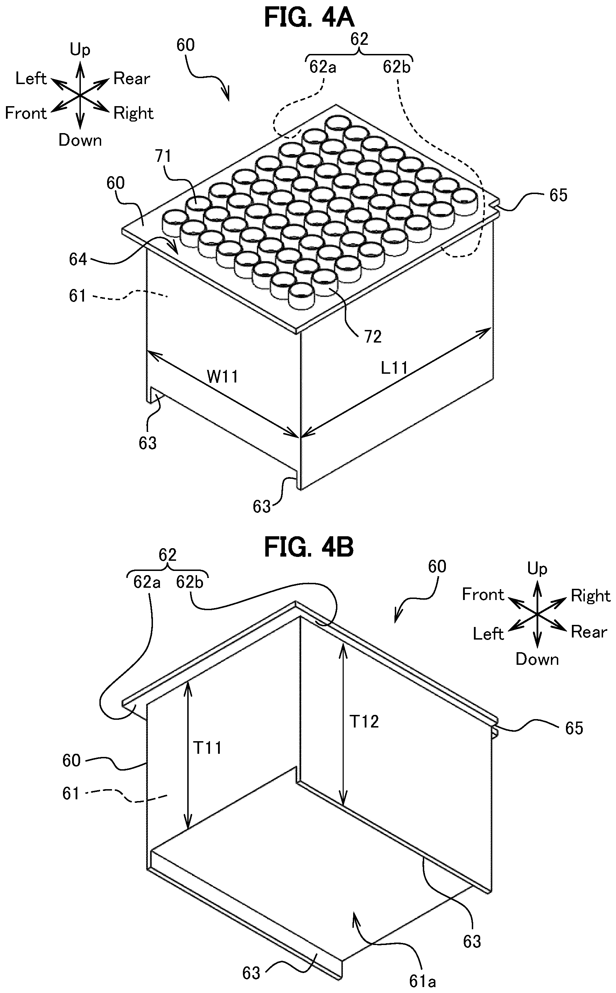

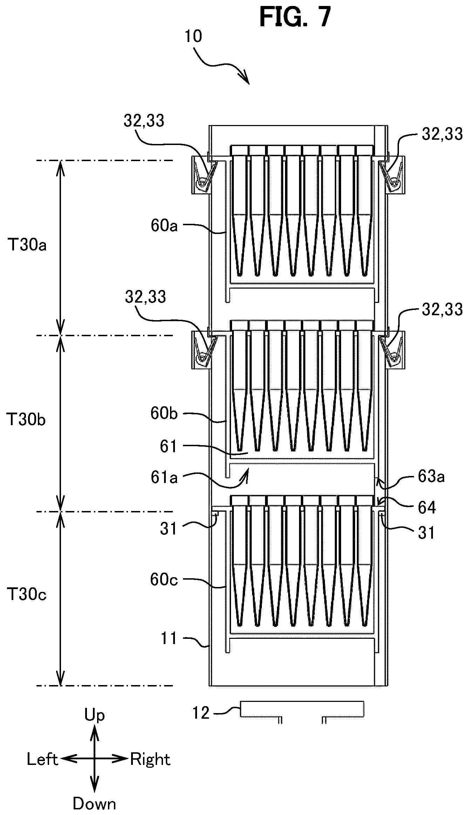

Each of intervals T30a, T30b, and T30c (FIG. 7) of the holding part 30 with the plurality of stages in the height direction is larger than the height T12 (FIG. 4B) of the container 60 below the engagement part 62. Accordingly, when the plurality of containers 60 are inserted and installed inside the installation section 11, the container installation apparatus 10 can suppress contact of the upper container 60 with the lower container 60.

The insertion port guide part 22 is a component that guides insertion of the container 60 into the insertion port 21. The insertion port guide part 22 is provided to partially block the insertion port 21 of the installation section 11. An upper end portion (top side) of the insertion port guide part 22 defines an insertion lower limit position of the container 60. Specifically, in the insertion of the container 60 into the insertion port 21 (i.e., installation of the container 60 in the installation section 11), the upper end portion of the insertion port guide part 22 guides the container 60 to a position where the upper container 60 does not come into contact with a mixing prevention part of foreign object 72 provided on an upper surface of the lower container 60. Moreover, in the insertion of the container 60 into the insertion port 21 (i.e., installation of the container 60 in the installation section 11), the upper end portion of the insertion port guide part 22 guides insertion of the container 60 such that the engagement part of the container 60 does not enter below the holding part 30 of the installation section 11. Moreover, a lower end portion (bottom side) of the insertion port guide part 22 defines an upper limit position of inserting the container 60. Specifically, in the insertion of the container 60 into the insertion port 21 (i.e., installation of the container 60 in the installation section 11), the lower end portion of the insertion port guide part 22 guides the container 60 to a position where the mixing prevention part of foreign object 72 provided on the upper surface of the lower container 60 does not come into contact with the upper container 60. In other words, the container installation apparatus 10 defines the position of each of the containers 60 inserted into the insertion ports 21 in the up-down direction, through a gap formed between the lower end portion (bottom side) and the upper end portion (top side) of the two insertion port guide parts 22 arranged one on top of another. The insertion port guide part 22 as described above can prevent the upper container 60 from interfering with the mixing prevention part of foreign object 72 of the lower container 60.

Moreover, an end portion (right side) of the insertion port guide part 22 in the width direction defines a left-right position of the container 60. Specifically, in the insertion of the container 60 into the insertion port 21 (i.e., installation of the container 60 in the installation section 11), the end portion of the insertion port guide part 22 in the width direction guides the container 60 to a position in a direction toward the opposite side to the insertion port guide part 22. Moreover, in the lifting of the container 60, the end portion of the insertion port guide part 22 in the width direction guides the container 60 to a position in the direction toward the opposite side to the insertion port guide part 22. The end portions of the insertion port guide parts 22 in the width direction as described above can fix the position of the container 60.

The insertion port guide part 22 is provided on one of the left and right sides of the insertion port 21 in the installation section 11 to restrict the insertion direction of the container 60 to a certain direction (i.e., longitudinal direction of the container 60 in the present embodiment). Specifically, the insertion port 21 has a structure that is asymmetric in a left-right direction by being provided with the insertion port guide part 22 on one side of the insertion port 21 to prevent installation of the container 60 in a wrong direction. In the present embodiment, the insertion port guide part 22 is provided on the left side of the insertion port 21 in the installation section 11. The container installation apparatus 10 as described above allows the user to insert the container 60 in an inward direction (rearward direction) in a state where the container 60 is shifted in the rightward direction by the insertion port guide part 22. The container installation apparatus 10 can thereby guide the insertion of the container 60 such that notch part 65 of the container 60 fits with the insertion restriction part 35 of the installation section 11.

In the present embodiment, the insertion port guide part 22 is formed of a rectangular-sheet-shaped member. However, the shape of the insertion port guide part 22 is not limited to the shown example. The top side portion of the insertion port guide part 22 is provided at a height position equivalent to that of a portion holding the container 60 in the holding part 30, to guide the insertion of the container 60 by coming into contact with a bottom surface of the engagement part 62 (FIGs. 4A to 4E) of the container 60 in the insertion of the container 60. Moreover, in the container installation apparatus 10, the insertion port guide part 22 can function as a reinforcement member of the left holding part 30 against load of the container 60 in the up-down direction.

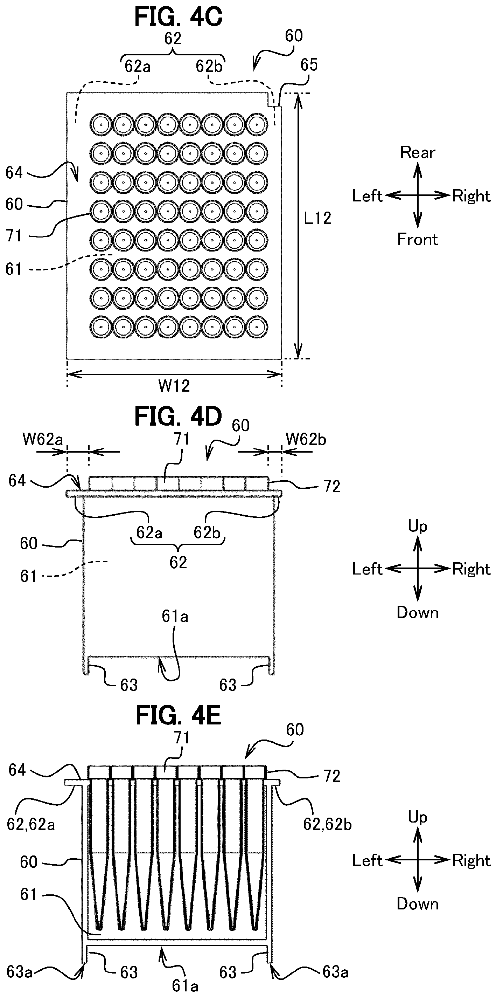

A lateral width W22 (FIG. 2) of a portion of the insertion port 21 provided with the insertion port guide part 22 is smaller than the longitudinal width L11 (FIG. 4A) of housing part 61 of the container 60 to be described later. Specifically, the relationship of "lateral width W22 (FIG. 2) < longitudinal width L11 (FIG. 4A)" is satisfied. Moreover, the lateral width W22 (FIG. 2) of the portion of the insertion port 21 provided with the insertion port guide part 22 is smaller than the longitudinal width L12 (FIG. 4C) of the engagement part 62 of the container 60 to be described later. Specifically, the relationship of "lateral width W22 (FIG. 2) < longitudinal width L12 (FIG. 4C)" is satisfied. The container installation apparatus 10 as described above can limit the insertion direction of the container 60 into the insertion port 21 of the installation section 11, only to the front-rear direction of the container 60.

Moreover, the lateral width W22 (FIG. 2) of the portion of the insertion port 21 provided with the insertion port guide part 22 is larger than the lateral width W11 (FIG. 4A) of the housing part 61 of the container 60 to be described later, and is smaller than the lateral width W12 (FIG. 4C) of the engagement part 62 of the container 60 to be described later. Specifically, the relationship of "lateral width W12 (FIG. 4A) < lateral width W22 (FIG. 2) < lateral width W12 (FIG. 4C)" is satisfied. The container installation apparatus 10 as described above allows the containers 60 to be inserted into the inside of the installation section 11 only when the housing part 61 (FIG. 4A) of the container 60 to be described later passes the portion of the insertion port 21 provided with the insertion port guide part 22. Accordingly, the container installation apparatus 10 can prevent the upper container 60 from coming into contact with the lower container 60 when the plurality of containers 60 are inserted into the inside of the installation section 11.

The insertion restriction part 35 is a component that restricts insertion of the container 60 inserted into the inside of the installation section 11 in a wrong direction. The insertion restriction part 35 is provided in a protruding shape to fit into the notch part 65 (FIGs. 4A to 4C) provided in a corner portion of the engagement part 62 (FIGs. 4A to 4E) of the container 60. In the present embodiment, the insertion restriction part 35 is provided in an inner (rear) corner on the opposite side (i.e., a right side in the present embodiment) to the insertion port guide part 22, inside the installation section 11. The container installation apparatus 10 as described above causes the user to insert the container 60 in the inward direction (rearward) in the state where the container 60 is shifted in the rightward direction by the insertion port guide part 22. In this case, if the insertion direction of the container 60 is wrong, the insertion restriction part 35 does not fit into the notch part 65 (FIGs. 4A to 4C) of the container 60, and the container 60 stops in the middle without being completely inserted. Accordingly, in the container installation apparatus 10, the insertion restriction part 35 can restrict the insertion of the container 60 inserted into the inside of the installation section 11 in a wrong direction. Note that the position and the shape of the insertion restriction part 35 are not limited to the illustrated example as long as the insertion restriction part 35 can restrict the insertion of the containers 60 inserted into the inside of the installation section 11 in a wrong direction.

### <Configuration of Movable Holding Part>

As shown in FIG. 3, the movable holding part 32 includes a holding member 33 that engages with the engagement part 62 of the container 60, a hinge shaft 34a (shaft part) that supports the holding member 33 such that the holding member 33 is rotatable about the hinge shaft 34a, and a kick spring 34b (biasing member) that biases the holding member 33 in the inside direction of the container 60. The hinge shaft 34a (shaft part) and the kick spring 34b (biasing member) form a movable mechanism 34 that allows the holding member 33 to move. The holding member 33 is configured to turn about the hinge shaft 34a (shaft part), and is biased in the inside direction of the container 60 by the kick spring 34b (biasing member).

In the present embodiment, explanation is given assuming that the holding member 33 is made of a metal material to secure strength. However, the holding member 33 may be made of a resin material or the like as long as sufficient strength can be secured.

The holding member 33 has a tilted surface, and when the container 60 is lifted with the lifting of the lift 12, the engagement part 62 (FIGs. 4A to 4E) of the container 60 comes into contact with the tilted surface. In this case, the holding member 33 is pushed in the outward direction by the engagement part 62 (FIGs. 4A to 4E) of the container 60, and retreats in a direction from the inside toward the outside of the container 60. Moreover, when the container 60 is further lifted, contact between the holding member 33 and the engagement part 62 (FIGs. 4A to 4E) of the container 60 is cancelled. In this case, the holding member 33 is pushed in the inward direction by the kick spring 34b (biasing member), and advances in a direction from the outside toward the inside of the container 60.

The holding member 33 includes a horizontal surface 33a and a restriction surface 33b. The horizontal surface 33a is a surface that horizontally holds the container 60 by engaging with (supporting) the engagement part 62 (FIGs. 4A to 4E) of the container 60 in a state where the holding member 33 has advanced into the inside of the container 60. The restriction surface 33b is a surface that comes into contact with an outer wall surface of the installation section 11 (or a wall surface of a not-shown, separately-provided member) in the state where the holding member 33 has advanced into the inside of the container 60, to stop the turning of the holding member 33 and maintain the horizontal surface 33a in a horizontal direction.

### <Configuration of Container>

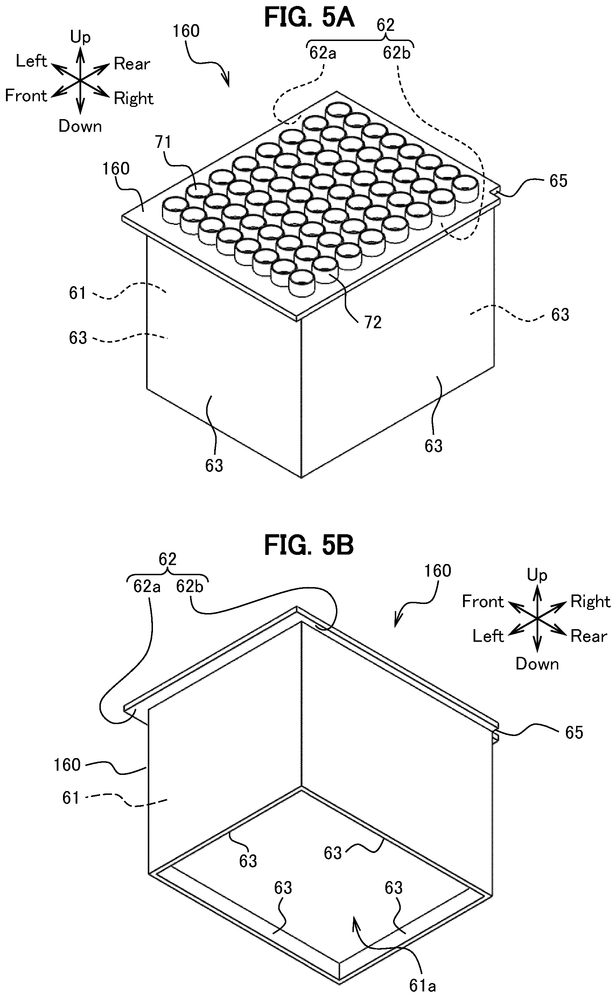

A configuration of each container 60 is explained below with reference to FIGs. 4A to 4E and FIGs. 5A and 5B. FIG. 4A is a perspective diagram of the container 60 viewed from the upper right side. FIG. 4B is a perspective diagram of the container 60 viewed from the lower right side. FIG. 4C is a top diagram of the container 60. FIG. 4D is a front diagram of the container 60. FIG. 4E is a front cross-sectional diagram of the container 60. In the present embodiment, explanation is given assuming that the container 60 is configured as a chip rack mounting a plurality of chips. However, the container 60 may be a container that houses reagents, specimens, or the like. The container 60 has a left-right asymmetric structure to prevent installation of the container 60 in a wrong direction.

As shown in FIG. 4A, the container 60 includes a housing part 61, an engagement part 62, a mixing prevention part of foreign object 72, leg parts 63, and a notch part 65.

The housing part 61 is a component for storing a housed object 71 inside the housing part. The housing part 61 has a rectangular cuboidal shape. The lateral width W11 of the housing part 61 in the left-right direction is smaller than the longitudinal width L11 of the housing part 61 in the front-rear direction. Specifically, the relationship of "lateral width W11 < longitudinal width L11" is satisfied.

The engagement part 62 is a component that is provided in at least left and right side surface portions of the container 60 and that engages with the holding part 30 provided in the left and right inner wall portions in the installation section 11 of the container installation apparatus 10. In the present embodiment, the engagement part 62 is provided to protrude from the housing part 61 in front, rear, left, and right side surface portions of the container 60. An engagement part 62a provided on the left side of the container 60 and an engagement part 62b provided on the right side of the container 60 in the engagement part 62 provided in the front, rear, left, and right side surface portions of the container 60 engage with the holding part 30 of the installation section 11. The left engagement part 62a and the right engagement part 62b vary from each other in a protruding amount from the housing part 61.

The mixing prevention part of foreign object 72 is a component that is provided in an upper portion of the container 60 and that prevents a foreign object from being mixed into the housed objects 71 in the container 60. In the present embodiment, explanation is given assuming that the mixing prevention part of foreign object 72 is provided on the chips mounted in the container 60. The mixing prevention part of foreign object 72 is provided to protrude upward from a ceiling surface 64. Note that the ceiling surface 64 is hidden behind the engagement part 62 in FIG. 4B.

The leg parts 63 are components that are provided in a lower portion of the container 60 and that form a hollow space inside (between) the leg parts 63. The leg parts 63 are formed such that the upper container 60 is placed on the lower container 60 while avoiding the mixing prevention part of foreign object 72 of the lower container 60 in the lifting of the containers 60 by the lift 12. In other words, the leg parts 63 prevent the upper container 60 from interfering with the mixing prevention part of foreign object 72 of the lower container 60. As shown in FIG. 4B, the height T12 of the container 60 below the engagement part 62 is larger than the height T11 of the housing part 61 below the engagement part 62 by an amount corresponding to the height of the leg parts 63. In the example shown in FIGs. 4A to 4E, the leg parts 63 are provided to protrude downward in two left and right side surface portions among four side surface portions of the housing part 61. In other words, the leg parts 63 are provided only in lower portions of the left and right side surface portions among the four side surface portions of the container 60. Since gaps between the leg part 63 and the leg part 63 are opened in the front surface portion and the rear surface portion in the container 60 as described above, contact of the upper container 60 with the lower container 60 is less likely to occur when a plurality of containers 60 are inserted into the installation section 11. Accordingly, the container 60 is more likely to achieve to prevent a foreign object from being mixed into the housed objects 71 in the container 60. Moreover, in the container 60, since the contact of the upper container 60 with the lower container 60 can be made less likely to occur than in a container 160 (FIGs. 5A and 5B) to be described later, intervals between the holding parts 30 of the installation section 11 can be made smaller. Accordingly, in the container 60, the height of the installation section 11 can be reduced (that is the installation section 11 can be downsized). Note that the shape of the leg parts 63 is not limited to the shown example, and may be any shape as long as the positions and the height are set such that the upper container 60 can be placed on the lower container 60 while avoiding the mixing prevention part of foreign object 72 of the lower container 60.

The notch part 65 is a part formed such that the insertion restriction part 35 inside the installation section 11 fits into the notch part 65. In the present embodiment, the notch part 65 is provided in the inner side (rear side) corner portion of the engagement part 62b. In the container 60, the direction of insertion into the installation section 11 is set to one direction such that the notch part 65 is on the inner side.

As shown in FIG. 4C, the engagement part 62 of the container 60 has a rectangular shape in the top view. Moreover, a length of the engagement part 62 of the container 60 in one direction in the top view varies from that in the other direction. In the present embodiment, a lateral width W12 of the engagement part 62 in the left-right direction is smaller than a longitudinal width L12 of the engagement part 62 in the front-rear direction. Specifically, the relationship of "lateral width W12 < longitudinal width L12" is satisfied. The container 60 as described above can guide the user in the insertion into the installation section 11 such that the container 60 is inserted in the direction (that is front-rear direction) of the longitudinal width L12 larger than the lateral width W12.

Moreover, the engagement part 62 includes the notch part 65 in one (i.e., inner right corner portion in the present embodiment) of the four corner portions, the notch part 65 formed such that the insertion restriction part 35 of the installation section 11 fits into the notch part 65. The container 60 as described above can be prevented from being inserted beyond a predetermined position by colliding with the insertion restriction part 35 when the insertion direction of the container 60 is wrong.

As shown in FIG. 4D, the engagement part 62 is provided to protrude from at least the left and right side surface portions of the container 60, at varying protruding amounts. In the present embodiment, a protruding amount W62a of the left engagement part 62a is larger than a protruding amount W62b of the right engagement part 62b. Specifically, the relationship of "protruding amount W62a of engagement part 62a > protruding amount W62b of engagement part 62b" is satisfied.

The container 60 as described above can limit the insertion direction of the container 60 when the container 60 is inserted into the insertion port 21 of the installation section 11 provided with the insertion port guide part 22. Moreover, in the container 60 as described above, since the protruding amount W62a of the engagement part 62a is large, the engagement part 62a reaches the holding part 30 of the installation section 11 in the state after the passing of the insertion port 21 of the installation section 11 provided with the insertion port guide part 22. Accordingly, the container 60 can cause the engagement part 62a to preferably engage with (i.e., be preferably supported on) the holding part 30 of the installation section 11.

Moreover, the container 60 is configured such that the engagement part 62 protrudes outside the housing part 61. Accordingly, the engagement part 62 functions as an anti-skid when the user grabs the container 60, and the case where the user erroneously drops the container 60 can be suppressed. Furthermore, in the container 60, the engagement part 62 engages with the holding part 30 when the container 60 is installed in the installation section 11 of the container installation apparatus 10. This feature can prevent the case where the container 60 is installed at a position where the container 60 should not be installed (i.e., a position that is not an installation completion position).

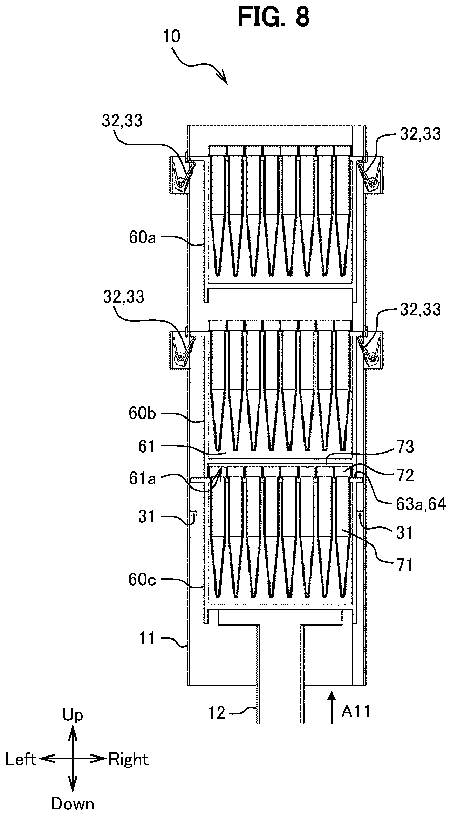

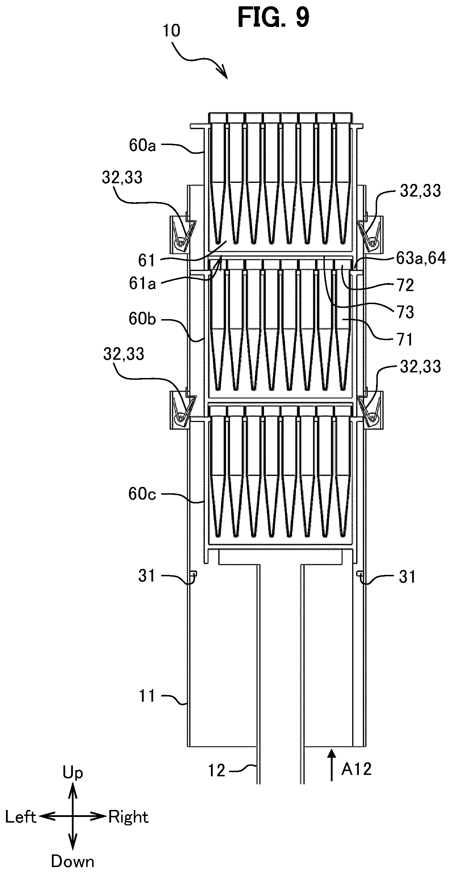

As shown in FIG. 4E, the container 60 includes the mixing prevention part of foreign object 72 protruding above the ceiling surface 64. Moreover, in the container 60, a hollow space is formed between the leg part 63 and the leg part 63. As shown in FIGs. 8 and 9, a height of the hollow space is set to such a height that, when the plurality of containers 60 are installed while being stacked one on top of another inside the container installation apparatus 10 such that installation surfaces 63a of the leg parts 63 of the upper container 60 come into contact with the lower container 60, a gap 73 is formed between a bottom surface 61a of the housing part 61 in the upper container 60 and a top portion of the mixing prevention part of foreign object 72 in the lower container 60.

### <Modified Example of Container>

The container 60 can be modified like, for example, a container 160 shown in FIGs. 5A and 5B. FIG. 5A is a perspective diagram of the container 160 of a modified example viewed from the upper right side. FIG. 5B is a perspective diagram of the container 160 of the modified example viewed from the lower right side.

As shown in FIGs. 5A and 5B, in the container 160, the leg parts 63 are provided to protrude downward in the four side surface portions of the front, rear, left, and right side surface portions of the housing part 61. Specifically, in the container 160, the leg parts 63 are provided in lower portions of the four side surface portions of the container 60.

A space between the leg part 63 and the leg part 63 is not opened in the container 160 as described above in comparison to the container 60 (FIGs. 4A and 4B). Accordingly, when the plurality of containers 160 are inserted into the installation section 11, the upper container 160 cannot be made less likely to come into contact with the lower container 160. However, in the container 160, since the leg parts 63 are provided in the lower portions of the four side surface portions of the container 160, the strength of the leg parts 63 can be improved with respect tom that in the container 60. In the container 160 as described above, warping and breakage of the leg parts 63 can be suppressed.

### <Operations of Container Installation Apparatus>

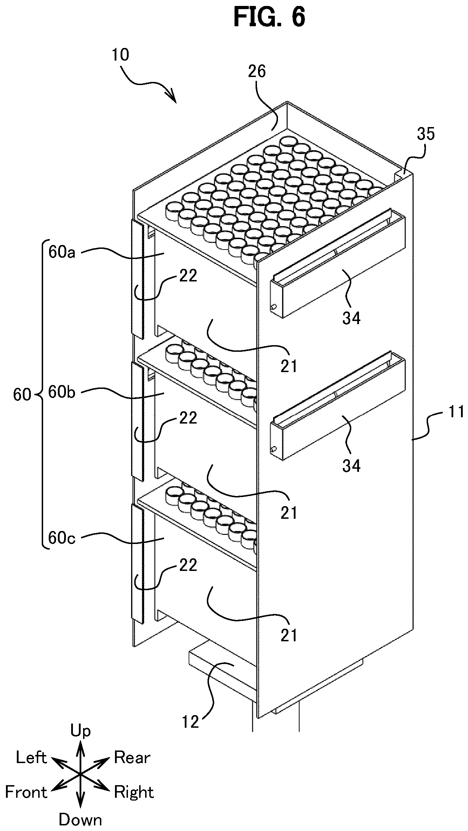

Operations of the container installation apparatus 10 are explained below with reference to FIGs. 6 to 11. FIG. 6 is an explanation diagram of a housing state of the container installation apparatus 10. FIGs. 7 to 11 are operation explanation diagrams of the container installation apparatus 10. In this section, explanation is given assuming the case where the user inserts the containers 60 into the installation section 11. When an operation in which the containers 60 are not used up in one inspection cycle and the containers 60 are additionally installed is performed, the container installation apparatus 10 operates as follows to achieve uniformization of the installation order and the use order, and to achieve maximization of the additional installation number.

As shown in FIG. 6, in the container installation apparatus 10, the plurality of containers 60 are installed in a state where the containers 60 are stacked one on top of another inside the installation section 11. In this case, the user inserts all containers 60 as many as the number of containers 60 that can be housed in the installation section 11, into the insertion ports 21 such that there is no empty insertion port 21 in the installation section 11. The containers 60 are inserted into the insertion ports 21 from the upper insertion port 21 to the lower insertion port 21, in the use order from earliest to latest. Specifically, for example, the user inserts the container 60a first in the use order into the insertion port 21 of the top stage, inserts the container 60b second in the use order into the insertion port 21 of the middle stage, and inserts the container 60c (last) third in the use order into the insertion port 21 in the bottom stage. Note that the case that the containers 60 are inserted into the insertion ports 21 from the upper insertion port 21 to the lower insertion port 21, in the use order from earliest to latest also applies to the other embodiments. Moreover, the user can change the insertion order of the containers 60 as long as the containers 60 can be inserted into the insertion ports 21 of the stages according to the use order. Accordingly, for example, the user may first insert the container 60b second in the use order into the insertion port 21 of the middle stage, then insert the container 60c third in the use order into the insertion port 21 of the bottom stage, and then insert the container 60a first in the use order into the insertion port 21 of the top stage.

As shown in FIG. 7, the user installs the containers 60 of the respective stages by inserting the containers 60 into the inside of the installation section 11. In this case, each container 60 is installed in a state where the container 60 is spaced apart from the other containers 60. Specifically, in the container installation apparatus 10, the movable holding part 32 of the upper stage holds the engagement part 62 of the container 60a, and the container 60a is installed. Moreover, in the container installation apparatus 10, the movable holding part 32 of the lower stage holds the engagement part 62 of the container 60b, and the container 60b is installed. Furthermore, in the container installation apparatus 10, the fixed holding part 31 holds the engagement part 62 of the container 60c, and the container 60c is installed.

As shown in FIG. 8, when the user operates the operation unit 41 (FIG. 1) and instructs start of the lifting-lowering operation of the lift 12, the container installation apparatus 10 lifts the lift 12 (see arrow A11). In this case, the first container 60c from the bottom is lifted. In this lifting, the engagement part 62 of the first container 60c from the bottom is lifted and is separated from the fixed holding part 31. Then, the installation surface 63a of the second container 60b from the top comes into contact with the first container 60c from the bottom. In this case, in the container installation apparatus 10, a gap 73 is formed between the bottom surface 61a of the housing part 61 in the second container 60b from the top and the top portion of the mixing prevention part of foreign object 72 in the first container 60c from the bottom.

Then, as shown in FIG. 9, when the container installation apparatus 10 lifts the lift 12, the containers 60a, 60b, and 60c are lifted (see arrow A12). In this case, the engagement part 62 of the second container 60b from the top is lifted and is separated from the movable holding part 32 of the lower stage. Moreover, the installation surfaces 63a of the first container 60a from the top come into contact with the second container 60b from the top. In this case, in the container installation apparatus 10, the gap 73 is formed between the bottom surface 61a of the housing part 61 in the first container 60a from the top and the top portion of the mixing prevention part of foreign object 72 in the second container 60b from the top. Furthermore, the engagement part 62 of the first container 60a from the top is lifted and is separated from the movable holding part 32 of the upper stage.

Note that lifting of the container 60 causes the engagement part 62 of the container 60 and the holding member 33 of the movable holding part 32 to come into contact with one another. In this case, the holding member 33 of the movable holding part 32 is pushed by the engagement part 62 of the container 60, and is turned in the retreating direction. Then, further lifting of the container 60 causes the contact between the engagement part 62 of the container 60 and the holding member 33 of the movable holding part 32 to be cancelled. In this case, the holding member 33 of the movable holding part 32 is pushed by the kick spring 34b (biasing members) and turned in the advancing direction. In the holding member 33, the restriction surface 33b comes into contact with the outer wall surface of the installation section 11 (or the not-shown, separately-provided wall surface) to stop the turning. In this case, the horizontal surface 33a of the holding member 33 is arranged in the horizontal direction.

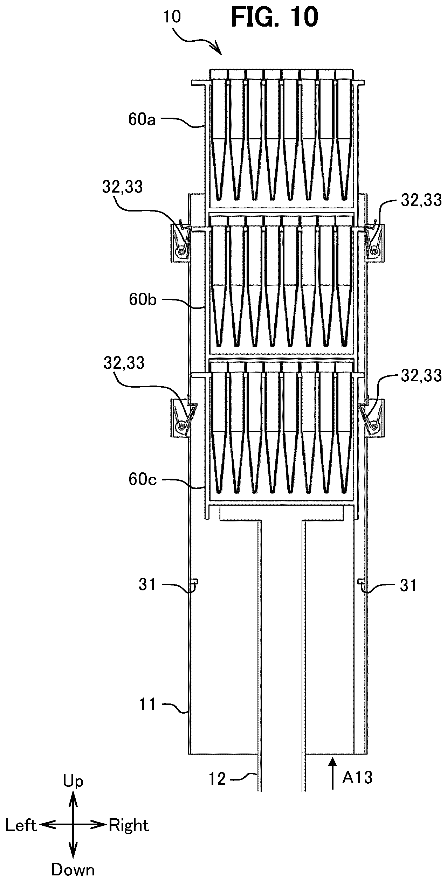

Then, as shown in FIG. 10, when the container installation apparatus 10 lifts the lift 12, the containers 60a, 60b, and 60c are further lifted (see arrow A13). The first container 60a from the top is thereby sent to the outside of the installation section 11 from the take-out port 26. In this case, the second container 60b from the top is installed on the movable holding part 32 of the upper stage. The user takes out the first container 60a from the top sent to the outside of the installation section 11.

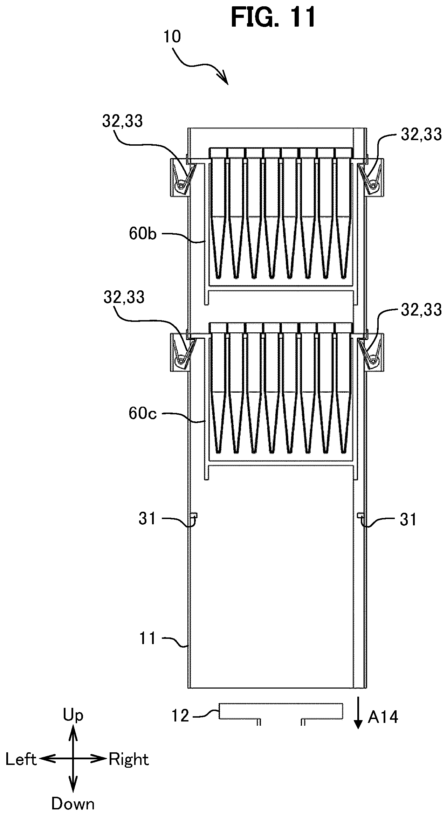

Thereafter, as shown in FIG. 11, the container installation apparatus 10 lowers the lift 12 (see arrow A14). Then, the containers 60b and 60c are lowered. In this case, in the container installation apparatus 10, the movable holding part 32 of the upper stage holds the engagement part 62 of the container 60b, and the container 60b is installed. Moreover, in the container installation apparatus 10, the movable holding part 32 of the lower stage holds the engagement part 62 of the container 60c, and the container 60c is installed. Since an open space is formed in the insertion port 21 of the bottom stage of the installation section 11, the user can insert the next container 60 into the insertion port 21 of the bottom stage. In the container installation apparatus 10 as described above, the containers 60 can be installed in the same order as the use order of the containers 60. Accordingly, the container installation apparatus 10 can perform an operation in which the containers 60 are taken out from the apparatus in the installation order and are used.

### <Main Characteristics of Container Installation Apparatus>

(1) As shown in FIGs. 1 and 2, the container installation apparatus 10 according to the present embodiment includes the installation section 11 and the lift 12. The installation section 11 is a component which installs the plurality of containers 60 provided with the engagement parts 62 in at least the left and right side surface portions inside the installation section 11. The lift 12 is a component that lifts and lowers the containers 60 inside the installation section 11. The installation section 11 includes the plurality of insertion ports 21 that are used to insert the containers 60 into the inside of the installation section 11, the take-out port 26 that is used to take out the containers 60 from the inside of the installation section 11, the holding part 30 with the plurality of stages that horizontally holds the containers 60 by engaging with the engagement part 62 of the container 60, and the insertion port guide part 22 that guides the insertion of the container 60 into the insertion port 21. The plurality of insertion ports 21 are provided to be opened in the front surface portion of the installation section 11. The take-out port 26 is provided to be opened in the ceiling portion of the installation section 11. The holding part 30 is provided in the left and right inner wall portions of the installation section 11. The insertion port guide part 22 is provided to partially block the insertion port 21 of the installation section 11.

In the container installation apparatus 10 according to the present embodiment as described above, the insertion port guide part 22 guides the insertion position of the container 60. Accordingly, in the container installation apparatus 10, the containers 60 can be inserted such that the upper container 60 does not collide with the lower container 60. Thus, the container installation apparatus 10 can achieve to prevent a foreign object from being mixed into the housed objects 71 in the containers 60. Moreover, in the container installation apparatus 10 as described above, the containers 60 can be installed in the same order as the use order of the containers 60. Accordingly, the container installation apparatus 10 can perform the operation in which the containers 60 are taken out from the apparatus in the installation order and are used. Thus, the container installation apparatus 10 can achieve to prevent a foreign object from being mixed and to improve the use order of the containers 60.

(2) As shown in FIG. 2, in the container installation apparatus 10 according to the present embodiment, the insertion port guide part 22 is preferably provided on one of the left and right sides of the insertion port 21 of the installation section 11.

The container installation apparatus 10 according to the present embodiment as described above allows the user to insert the container 60 in the inward direction (i.e., rearward direction) in the state where the container 60 is shifted in the direction toward the opposite side to the side where the insertion port guide part 22 is provided. Accordingly, the container installation apparatus 10 can preferably guide the insertion of the container 60.

(3) As shown in FIG. 2, in the container installation apparatus 10 according to the present embodiment, the top side portion of the insertion port guide part 22 are preferably provided at the height position equivalent to that of the holding part 30 that holds the container 60.

In the container installation apparatus 10 according to the present embodiment as described above, the top side portion of the insertion port guide part 22 guides the insertion height position of the container 60. Accordingly, in the container installation apparatus 10, the containers 60 can be inserted such that the upper container 60 does not collide with the lower container 60. Thus, the container installation apparatus 10 can achieve to prevent a foreign object from being mixed into the housed objects 71 in the container 60.

(4) As shown in FIGs. 2 and 3, in the container installation apparatus 10 according to the present embodiment, the holding part 30 is preferably arranged to protrude from the left and right inner wall portions of the installation section 11 into the inside of the installation section 11.

In the container installation apparatus 10 according to the present embodiment as described above, the container 60 can be preferably installed inside the installation section 11.

(5) As shown in FIG. 2, the container installation apparatus 10 according to the present embodiment is preferably configured such that a bottom stage of the holding part 30 among a plurality of stages of the holding part 30 is formed inside the installation section 11 as the fixed holding part 31, while the stages of the holding parts 30 other than the bottom stage are formed inside the installation section 11 as the movable holding parts 32 to be movable when the container 60 is lifted with the lifting of the lift 12.

The container installation apparatus 10 according to the present embodiment as described above can send the containers 60 installed on the movable holding part 32 and the fixed holding part 31 toward the take-out port 26 by lifting the lift 12.

(6) As shown in FIG. 3, in the container installation apparatus 10 according to the present embodiment, the movable holding part 32 is preferably configured to include the holding member 33 that engages with the engagement part 62 of the container 60, the hinge shaft 34a (i.e., a shaft part) that supports the holding member 33 such that the holding member 33 is rotatable about the hinge shaft 34a, and the kick spring 34b (i.e., a biasing member) that biases the holding member 33 in the inside direction of the container 60.

In the container installation apparatus 10 according to the embodiment as described above, the kick spring 34b (i.e., a biasing member) can bias the holding member 33 in the inside direction of the container 60. Moreover, in the container installation apparatus 10, when the container 60 passes by the holding member 33 with the lifting of the lift 12, the holding member 33 turns to retreat, and then turns to advance. In the container installation apparatus 10 as described above, the containers 60 can be installed in the use order.

(7) In the container installation apparatus 10 according to the present embodiment, each of the intervals T30a, T30b, and T30c (FIG. 7) of the plurality of stages of the holding part 30 in the height direction is preferably higher than the height T12 (FIG. 4B) of the container 60 below the engagement part 62.

The container installation apparatus 10 according to the present embodiment as described above can suppress contact of the upper container 60 with the lower container 60 when a plurality of containers 60 are inserted into the inside of the installation section 11 and installed.

(8) As shown in FIGs. 2 and 3, in the container installation apparatus 10 according to the present embodiment, the installation section 11 preferably includes the insertion restriction part 35 that restricts insertion of the container 60 from being inserted into the inside of the installation section 11 in a wrong insertion direction.

In the container installation apparatus 10 according to the present embodiment as described above, the insertion restriction part 35 can prevent complete insertion of the container 60 and stop the container 60 in the middle when the container 60 is inserted into the inside of the installation section 11 in a wrong direction. Accordingly, the container installation apparatus 10 can prevent the case where the user completely inserts the container 60 in a wrong direction.

(9) As shown in FIGs. 1 and 2, in the container installation apparatus 10 according to the present embodiment, the installation section 11 is formed in the ] shape by performing sheet metal processing (i.e., bending) on a flat-sheet-shaped metal member. In this configuration, the holding part 30 is preferably configured such that horizontal surfaces are formed by sheet-shaped members.

In the container installation apparatus 10 according to the present embodiment as described above, the installation section 11 can be formed by deforming the sheet-shaped member in the ] shape. In the container installation apparatus 10 as described above, the installation section 11 can be formed at low cost.

### <Main Characteristics of Containers>

(1) With respect to the container 60 according to the present embodiment, a plurality of containers are installed while being stacked one on top of another in the up-down direction inside the container installation apparatus 10. As shown in FIG. 4A, the container 60 is provided with the housing part 61 which stores the housed objects 71 inside thereof, the engagement part 62 that is provided in at least the left and right side surface portions and that engages with the holding part 30 provided in the left and right inner wall portions of the container installation apparatus 10, the mixing prevention part of foreign object 72 that is provided in the upper portion and that prevents a foreign object to be mixed into the inside thereof, and the leg parts 63 that are provided in the lower portions and that forms the hollow space inside thereof. As shown in FIGs. 8 and 9, a height of the hollow space is set to such a height that the gap 73 is formed between the bottom surface of the housing part 61 in the upper container 60 and the top portion of the mixing prevention part of foreign object 72 in the lower container 60 when the plurality of containers 60 are installed while being stacked one on top of another inside the container installation apparatus 10.

The container 60 according to the present embodiment as described above can suppress the case where the upper container 60 comes into contact with the lower container 60 when the plurality of containers 60 are installed in the container installation apparatus 10.

(2) As shown in FIG. 4D, in the container 60 according to the present embodiment, the engagement part 62 is preferably provided to protrude from at least the left and right side surface portions of the container 60 at varying protruding amounts W62a and W62b.

The container 60 according to the present embodiment as described above can limit the insertion direction when the container 60 is installed in the container installation apparatus 10. Moreover, a protruding amount W62a of the engagement part 62a is large in the container 60 as described above. Thereby, the engagement part 62a reaches the holding part 30 of the installation section 11 in the state after the container passes the insertion ports 21 of the installation section 11 provided with the insertion port guide part 22. Accordingly, in the container 60, the engagement part 62a can be preferably engaged with (i.e., supported on) the holding part 30 of the installation section 11.

(3) As shown in FIG. 4C, the container 60 according to the present embodiment preferably has a rectangular shape in the top view, and each includes the notch part 65 in one of the four corners. Herein, the notch part 65 is formed such that the insertion restriction part 35 provided inside the container installation apparatus 10 fits into the notch part 65.

When the container 60 according to the present embodiment as described above is inserted into the inside of the container installation apparatus 10 in a wrong direction, the insertion restriction part 35 provided inside the container installation apparatus 10 does not fit into the notch part 65, and the container 60 is thus stopped in the middle without being completely inserted. Accordingly, the container 60 can prevent the case where the user completely inserts the container 60 into the inside of the container installation apparatus 10 in a wrong direction.

As shown in FIG. 4C, a length of the container 60 according to the present embodiment in one direction in the top view preferably varies from that in the other direction.

The container 60 according to the present embodiment as described above can guide the user such that the user inserts the container 60 in the longitudinal direction in insertion into the container installation apparatus 10.

(5) As shown in FIGs. 4A to 4E, in the container 60 according to the present embodiment, the leg parts 63 are preferably provided only in the lower portion of the left and right side surface portions among the four side surface portions of each container 60.

In the container 60 according to the present embodiment as described above, since the space between the leg part 63 and the leg part 63 is opened in the front surface portion and the rear surface portion, the upper container 60 can be made less likely to come into contact with the lower container 60 when the plurality of containers 60 are inserted into the installation section 11. Accordingly, the container 60 can be made more likely to achieve to prevent a foreign object from being mixed into the housed objects 71 in the containers 60.

(6) As shown in FIGs. 4A to 4E, in the container 60 according to the present embodiment, the engagement part 62 is preferably provided in a protruding shape to function as anti-skids.

In the container 60 according to the present embodiment as described above, since the engagement part 62 functions as the anti-skids, the container 60 can suppress erroneous dropping of the container 60 by the user.

(7) As shown in FIGs. 5A to 5B, in the container 160 according to the present embodiment, the leg parts 63 may be configured to be provided in the lower portions of the four side surface portions of each container 60.

In the container 60 according to the present embodiment as described above, since the leg parts 63 are provided in the four side surface portions of each container 160, the strength of the leg parts 63 can be improved from that in the containers 60.

As described above, the container installation apparatus 10 according to the present embodiment 1 can achieve to prevent a foreign object from being mixed and to improve the use order of the containers 60.

### [Embodiment 2]

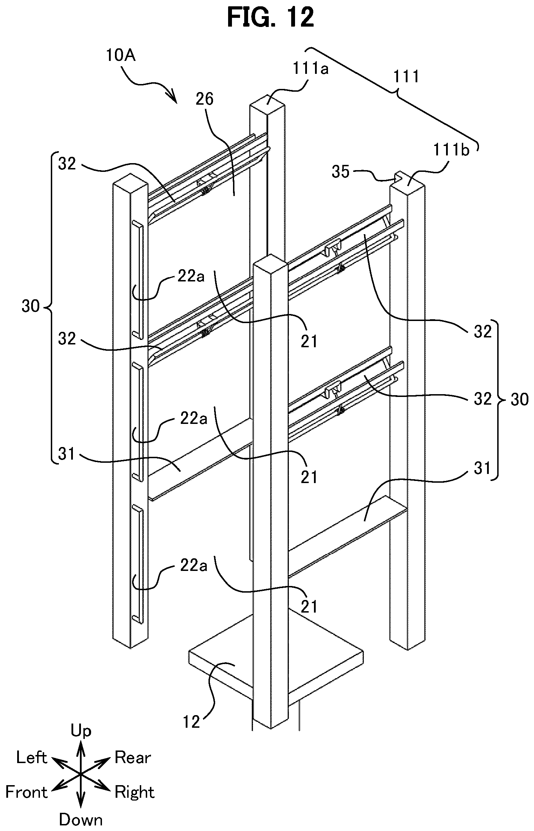

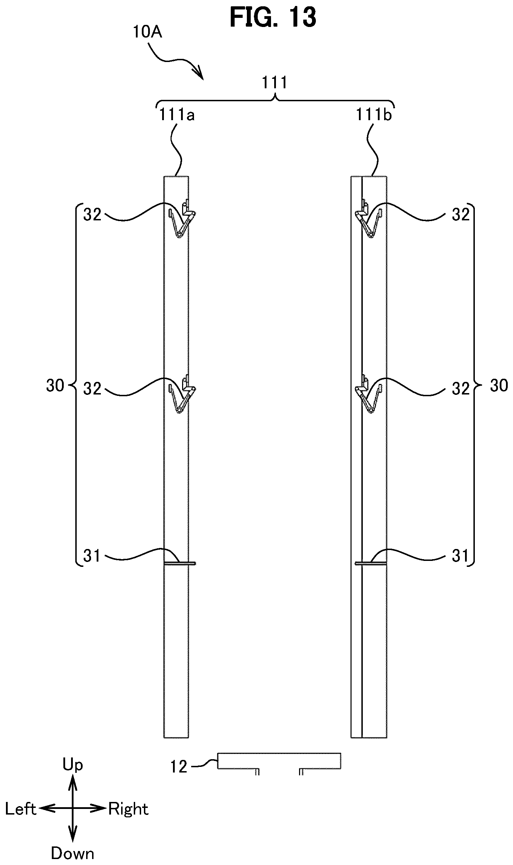

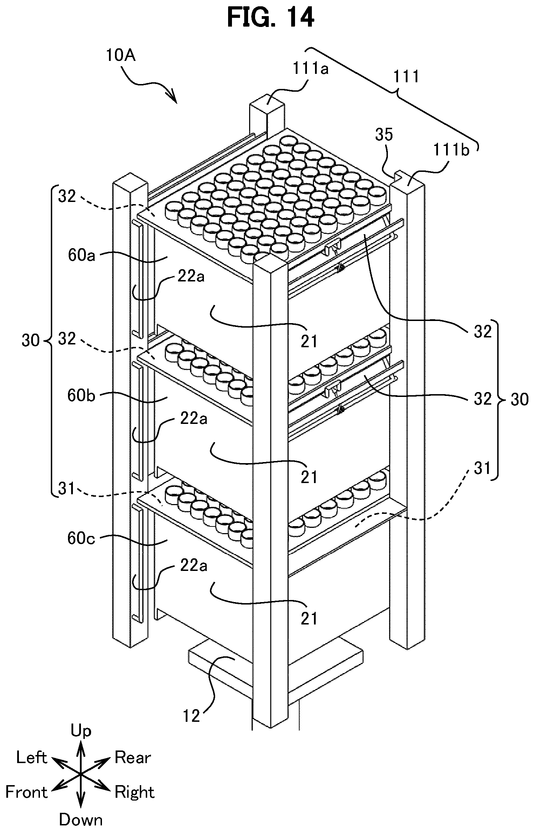

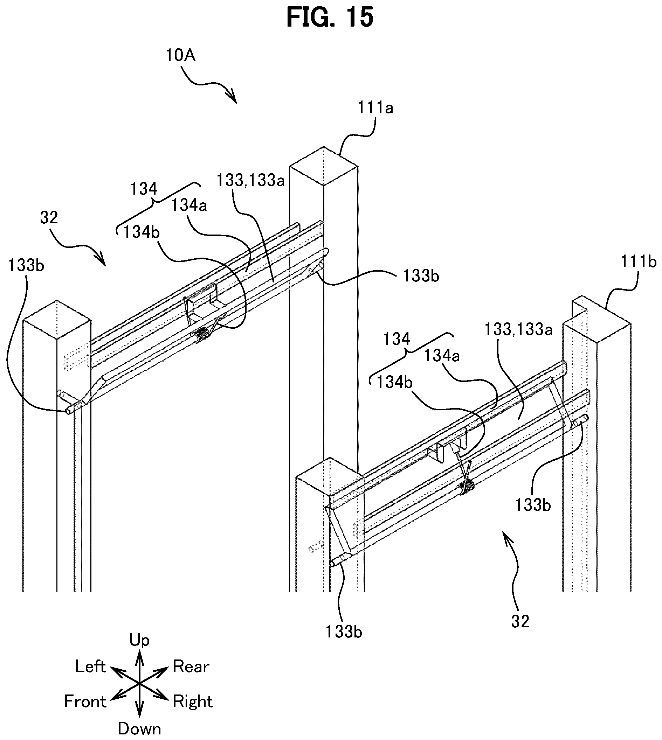

A configuration of a container installation apparatus 10A according to the present embodiment 2 is explained below with reference to FIGs. 12 to 15. FIG. 12 is a perspective diagram of the container installation apparatus 10A according to the present embodiment 2. FIG. 13 is a front diagram of the container installation apparatus 10A. FIG. 14 is an explanation diagram of the container installation apparatus 10A. FIG. 15 is a perspective diagram of the movable holding parts 32 of the container installation apparatus 10A.

As shown in FIGs. 12 and 13, when the container installation apparatus 10A according to the present embodiment 2 is compared with the container installation apparatus 10 according to the embodiment 1 (see FIG. 2), the container installation apparatus 10A according to the present embodiment 2 is different in that it includes an installation section 111 instead of the installation section 11.

The installation section 111 is a section formed of rod-shaped members in a frame shape. The installation section 111 includes a left installation section 111a and a right installation section 111b. The insertion restriction part 35 is provided in a rear portion of the right installation section 111b. Moreover, insertion port guide parts 22a are provided in the left installation section 111a.

The insertion port guide parts 22a are formed of rod-shaped members in a ] shape. A top side portion of the insertion port guide part 22a is provided at a height position equivalent to that of the portion of the holding part 30 that holds the container 60, to guide insertion of the container 60 by coming into contact with the bottom surface of the engagement part 62 (FIGs. 4A to 4E) of the container 60 in the insertion of the container 60.

As shown in FIG. 14, the container installation apparatus 10A according to the present embodiment 2 includes three insertion ports 21 in the front surface portion and one take-out port 26 (FIG. 12) in the ceiling portion like the container installation apparatus 10 according to the embodiment 1 (see FIG. 2).

In the container installation apparatus 10A, the plurality of containers 60 are installed in a state where they are stacked one on top of another inside the installation section 111. The containers 60 are inserted into the insertion ports 21 from the upper insertion port 21 to the lower insertion port 21, in the order of use from earliest to latest. The container installation apparatus 10A according to the present embodiment 2 operates like the container installation apparatus 10 according to the embodiment 1 (see FIG. 2).

As shown in FIG. 15, the fixed holding part 31 of the container installation apparatus 10A is formed of flat-sheet-shaped members. Meanwhile, the movable holding parts 32 of the container installation apparatus 10A are formed of rod-shaped members in a frame shape to have horizontal surfaces. In the present embodiment, the movable holding part 32 includes a holding member 133 that engages with the engagement part 62 of the container 60 and a movable mechanism 134 that allows the holding member 133 to move. The holding member 133 includes a plate part 133a that engages with the engagement part 62 of the container 60 and a shaft part 133b that supports the plate part 133a such that the plate part 133a is rotatable about the shaft part 133b. In the example shown in FIG. 15, the holding member 133 is formed by joining a plurality of flat-sheet-shaped members. The movable mechanism 134 includes a restriction member 134a that restricts turning of the holding member 133 and the kick spring 134b (i.e., biasing member) that biases the holding member 33 in the inside direction of the container 60.

In the present embodiment, explanation is given assuming that the holding member 133 is made of a metal material to secure strength. However, the holding member 133 may be made of a resin material or the like as long as sufficient strength can be secured.

The engagement part 62 of the container 60 comes into contact with the holding member 133 when the container 60 is lifted with the lifting of the lift 12. In this case, the holding member 133 is pushed in the outward direction by the engagement part 62 of the container 60, and retreats in the direction from the inside toward the outside of the container 60. Then, when the container 60 is further lifted, the contact of the holding member 133 with the engagement part 62 of the container 60 is cancelled. In this case, the holding member 133 is pushed in the inward direction by the kick spring 134b (i.e., a biasing member), and advances in the direction from the outside toward the inside of the container 60. The holding member 133 pushed in the inward direction by the kick spring 134b (i.e., the biasing member) partially comes into contact with the restriction member 134a, and turning thereof is thereby stopped in a state where the holding member 133 has advanced into the inside of the container 60. The holding member 133 provided in the left installation section 111a and the holding member 133 provided in the right installation section 111b are thereby stopped at an angle at which the container 60 can be horizontally held between the holding members 133.

In the container installation apparatus 10A as described above, the installation section 111 can be formed of the rod-shaped members. Moreover, in the container installation apparatus 10A, the fixed holding part 31 can be formed of the flat-sheet-shaped members. Furthermore, in the container installation apparatus 10A, the movable holding parts 32 are formed of the rod-shaped members, and the fixed holding part 31 of the container installation apparatus 10A is formed of the flat-sheet-shaped members. Meanwhile, in the container installation apparatus 10A, the holding members 133 of the movable holding parts 32 can be formed of the rod-shaped members.

The container installation apparatus 10A as described above can prevent a foreign object from being mixed and improve the use order of the containers 60 like the container installation apparatus 10 according to the embodiment 1.

Moreover, in comparison to the container installation apparatus 10 according to the embodiment 1, the container installation apparatus 10A has a configuration in which sides of the installation section 111 are open. Accordingly, the user can visually recognize the state of each of the containers 60 installed in the installation section 111 from the sides of the installation section 111.

### [Embodiment 3]

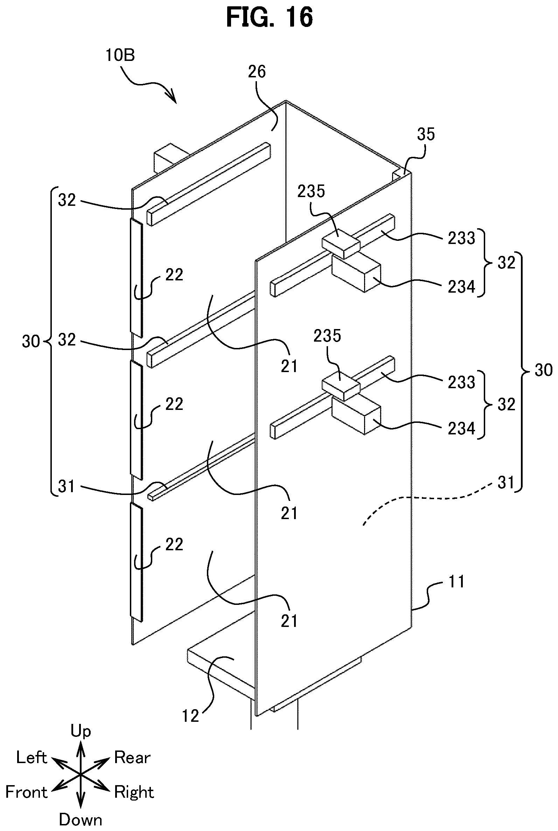

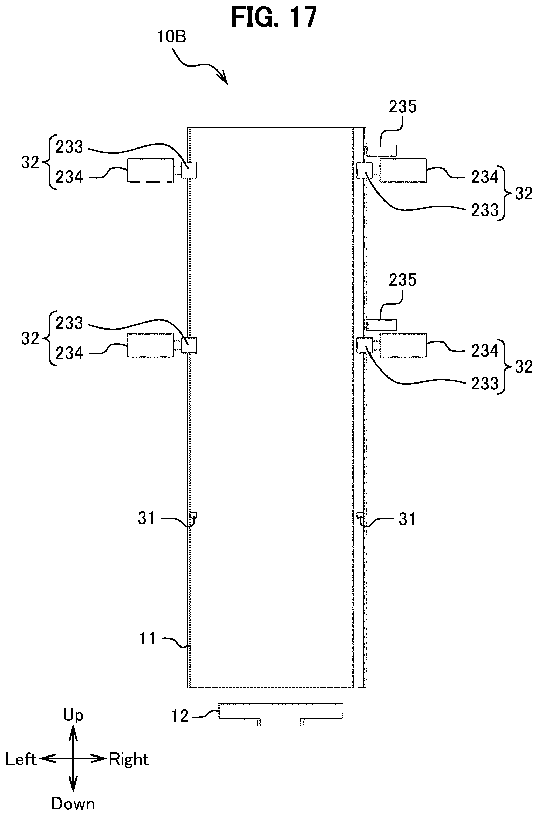

A configuration of a container installation apparatus 10B according to the present embodiment 3 is explained below with reference to FIGs. 16 and 17. FIG. 16 is a perspective diagram of the container installation apparatus 10B according to the present embodiment 3. FIG. 17 is a front diagram of the container installation apparatus 10B.

As shown in FIGs. 16 and 17, when the container installation apparatus 10B according to the present embodiment 3 is compared with the container installation apparatus 10 according to the embodiment 1 (see FIG. 2), the container installation apparatus 10B according to the present embodiment 3 is different in that the movable holding parts 32 are formed of holding members 233 and solenoids 234 (electric moving members) and the container installation apparatus 10B includes container detection sensors 235.

The holding member 233 is a member that engages with the engagement part 62 of the container 60. The holding member 233 is configured to slide and move in the left-right direction.

In the example shown in FIG. 16, the solenoids 234 are electric moving members that cause the holding members 233 to selectively advance (proceed) or retreat by sliding or moving with respect to an inner space inside the installation section 11.

The container detection sensors 235 are sensors that detect the container 60 (i.e., particularly, the engagement part 62 of the container 60) lifted inside the installation section 11.

Note that, although the movable holding parts 32 are configured such that the solenoids 234 (electric moving members) cause the holding members 233 to slide and move in the present embodiment, the movable holding parts 32 are not limited to the mechanism of the shown example.

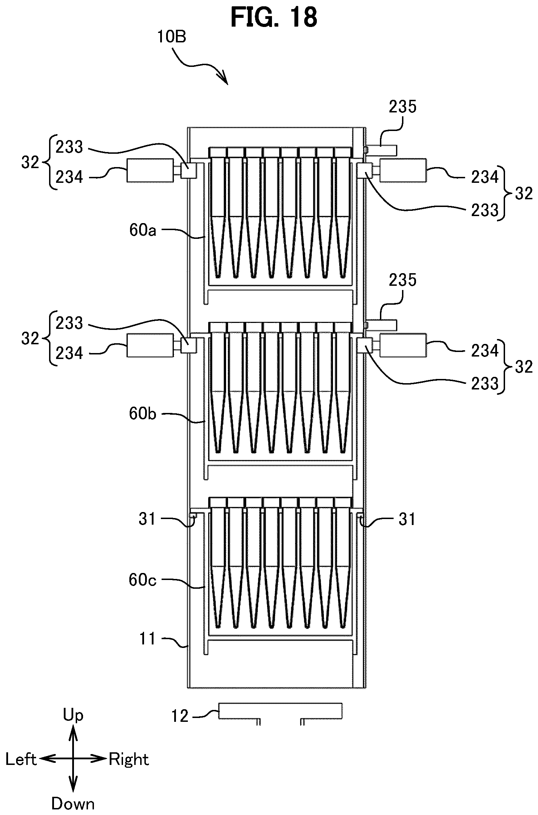

Operations of the container installation apparatus 10B are explained below with reference to FIGs. 18 to 22. FIGs. 18 to 22 are operation explanation diagrams of the container installation apparatus 10B. In an initial state, the container installation apparatus 10B is in a state where the holding members 233 of the respective stages have advanced (state where the holding members 233 are made to proceed into the inner space inside the installation section 11).

As shown in FIG. 18, in the container installation apparatus 10B, the plurality of containers 60 are installed in the state where the containers 60 are stacked one on top of another inside the installation section 11. The containers 60 are inserted into the insertion ports 21 from the upper insertion port 21 to the lower insertion port 21, in the order of use from earliest to latest. The user installs the containers 60 of the respective stages by inserting the containers 60 into the inside of the installation section 11. In this case, each container 60 is installed in a state where the container 60 is spaced apart from the other containers 60. Specifically, in the container installation apparatus 10B, the container 60a is installed on the movable holding part 32 of the upper stage. Moreover, in the container installation apparatus 10B, the container 60b is installed on the movable holding part 32 of the lower stage. Furthermore, in the container installation apparatus 10B, the container 60c is installed on the fixed holding part 31.

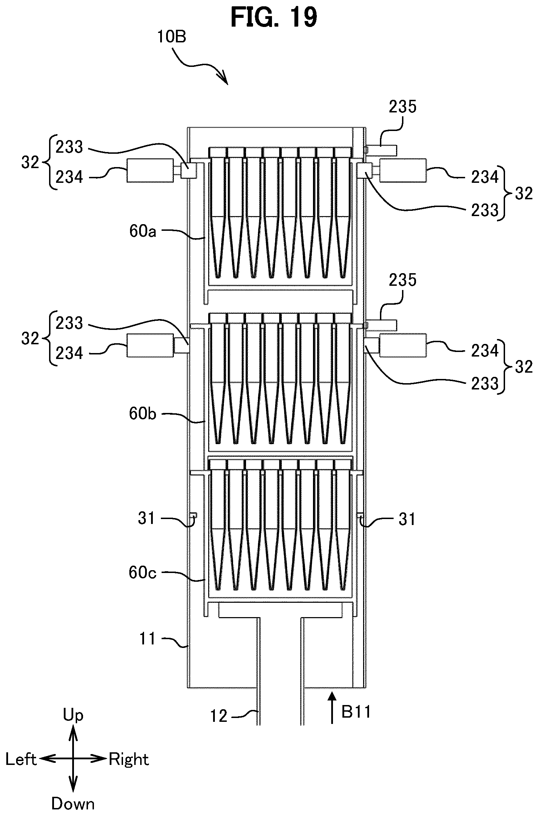

As shown in FIG. 19, when the user operates the operation unit 41 (FIG. 1) and instructs start of the lifting-lowering operation of the lift 12, the container installation apparatus 10B lifts the lift 12 (see arrow B11). In this case, the first container 60c from the bottom is lifted. In this lifting, the engagement part 62 of the first container 60c from the bottom is lifted and is separated from the fixed holding part 31. Then, the installation surfaces 63a of the second container 60b from the top (FIG. 4E) come into contact with the first container 60c from the bottom. Then, when the first container 60c from the bottom is further lifted, the second container 60b from the top is pushed by the first container 60c from the bottom and is lifted. In this case, the engagement part 62 of the second container 60b from the top (FIG. 4E) is lifted, and is separated from the holding members 233 of the movable holding part 32 of the lower stage. In this case, the container detection sensor 235 of the lower stage detects the lifting of the container 60b (particularly, the engagement part 62 of the container 60b (FIG. 4E)). Then, the container installation apparatus 10B drives the solenoids 234 of the movable holding part 32 of the lower stage, and causes the holding members 233 of the movable holding part 32 of the lower stage to retreat.

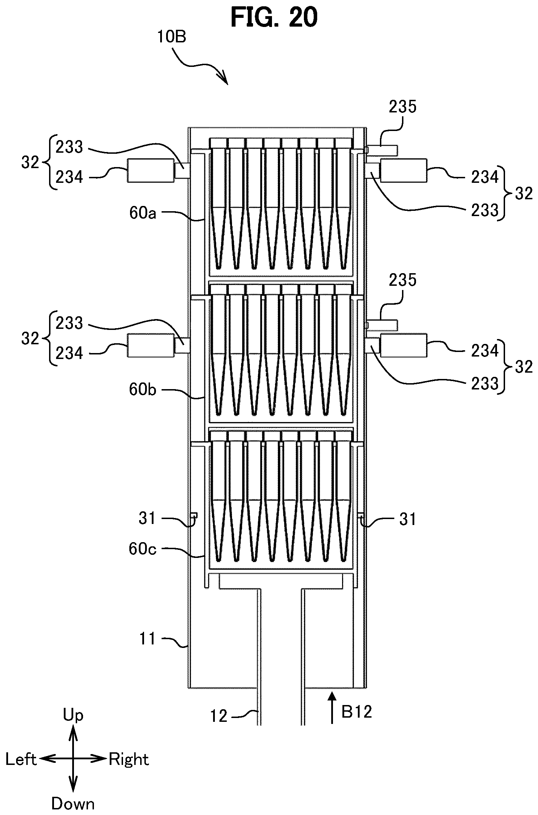

Thereafter, as shown in FIG. 20, when the container installation apparatus 10B lifts the lift 12, the installation surfaces 63a of the first container 60a from the top (FIG. 4E) come into contact with the second container 60b from the top, and the containers 60a, 60b, and 60c are lifted (see arrow B12). In this case, the engagement part 62 of the first container 60a from the top (FIG. 4E) is lifted and separated from the movable holding part 32 of the upper stage. In this case, the container detection sensor 235 of the upper stage detects the lifting of the container 60a (particularly, the engagement part 62 of the container 60a (FIG. 4E)). Then, the container installation apparatus 10B drives the solenoids 234 of the movable holding part 32 of the upper stage, and causes the holding members 233 of the movable holding part 32 of the upper stage to retreat.

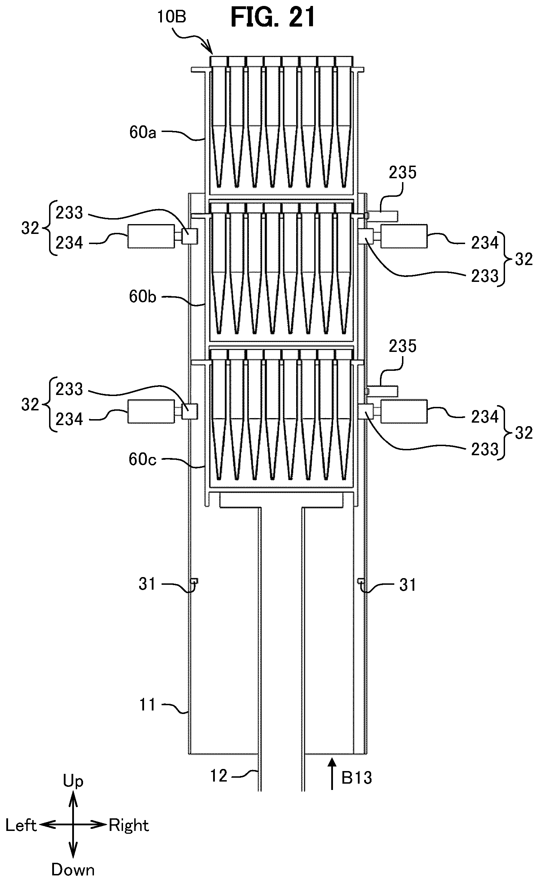

Thereafter, as shown in FIG. 21, when the container installation apparatus 10B lifts the lift 12, the containers 60a, 60b, and 60c are further lifted (see arrow B13). The first container 60a from the top is thereby sent out to the outside of the installation section 11 from the take-out port 26. In this case, the engagement part 62 of the second container 60b from the top (FIG. 4E) is arranged at a position above the container detection sensor 235 of the upper stage. Accordingly, the container detection sensor 235 of the upper stage detects the lifting of the container 60b (particularly, the engagement part 62 of the container 60b (FIG. 4E)). Then, the container installation apparatus 10B drives the solenoids 234 of the movable holding parts 32 of the upper and lower stages to cause the holding members 233 of the movable holding parts 32 of the upper and lower stages to advance. Thereafter, the user takes out the first container 60a from the top sent out to the outside of the installation section 11.

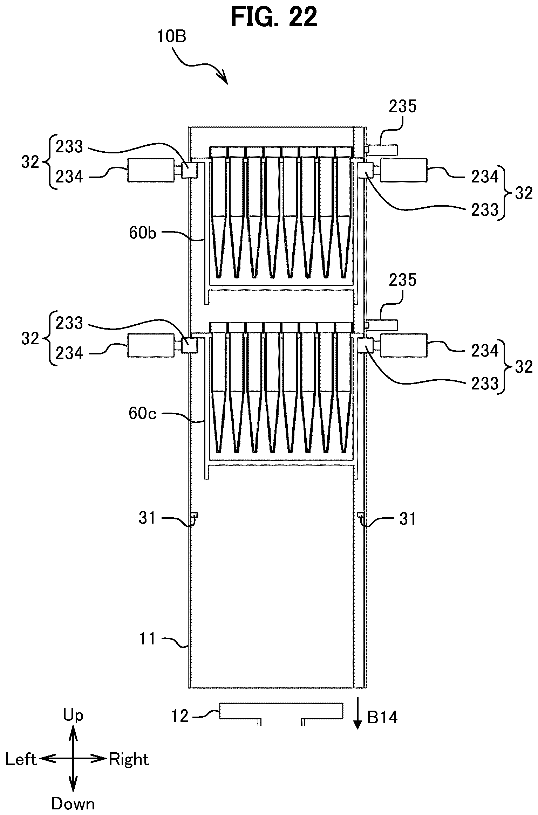

Thereafter, as shown in FIG. 22, the container installation apparatus 10B lowers the lift 12 (see arrow B14). Then, the containers 60b and 60c are lowered. In this case, in the container installation apparatus 10B, the movable holding part 32 of the upper stage holds the engagement part 62 of the container 60b (FIG. 4E), and the container 60b is installed. Moreover, in the container installation apparatus 10B, the movable holding part 32 of the lower stage holds the engagement part 62 of the container 60c (FIG. 4E), and the container 60c is installed. Since an open space is formed in the insertion port 21 of the bottom stage of the installation section 11, the user can insert the next container 60 into the insertion port 21 of the bottom stage. In the container installation apparatus 10B as described above, the containers 60 can be installed in the same order as the use order of the containers 60. Accordingly, the container installation apparatus 10B can perform an operation in which the containers 60 are taken out from the apparatus in the installation order and used.

The container installation apparatus 10B as described above can achieve to prevent a foreign object from being mixed and to improve the use order of the containers 60 like the container installation apparatuses 10 and 10A according to the other embodiments.

Moreover, since the container installation apparatus 10A as described above uses the solenoids 234 (electric moving members) without using the kick springs 34b (biasing members) in the movable holding parts 32, operation noise of the movable holding parts 32 can be reduced from that in the container installation apparatus 10 according to the embodiment 1.

### [Embodiment 4]

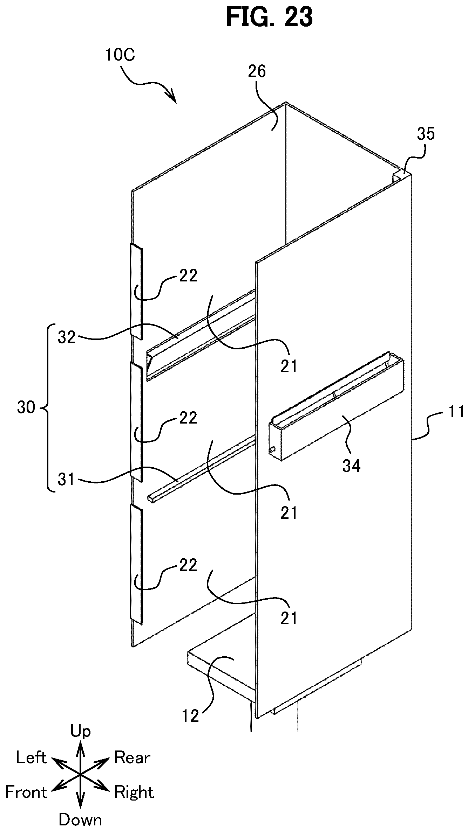

A configuration of a container installation apparatus 10C according to the present embodiment 4 is explained below with reference to FIG. 23. FIG. 23 is a perspective diagram of the container installation apparatus 10C according to the present embodiment 4.

As shown in FIG. 23, when the container installation apparatus 10C according to the present embodiment 4 is compared with the container installation apparatus 10 according to the embodiment 1 (see FIG. 2), the container installation apparatus 10C is different in that the installation section 11 includes the holding parts 30 only in the insertion ports 21 of stages other than the top stage (specifically, the second stage from the top and the first stage from the bottom). Accordingly, in the present embodiment, the container installation apparatus 10C includes the fixed holding part 31 in the first stage from the bottom, and includes the movable holding part 32 in the second stage from the top.

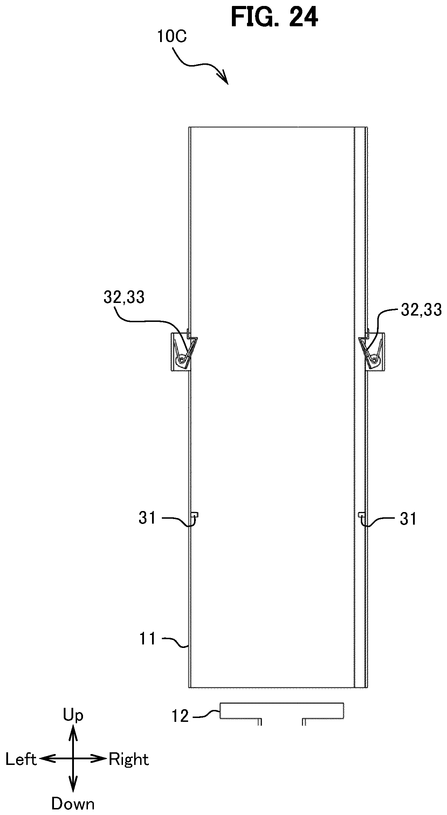

Operations of the container installation apparatus 10C are explained below with reference to FIGs. 24 to 26. FIGs. 24 to 26 are operation explanation diagrams of the container installation apparatus 10C.

In the example shown in FIG. 24, the container installation apparatus 10C is in a state where the containers 60 are not installed yet.

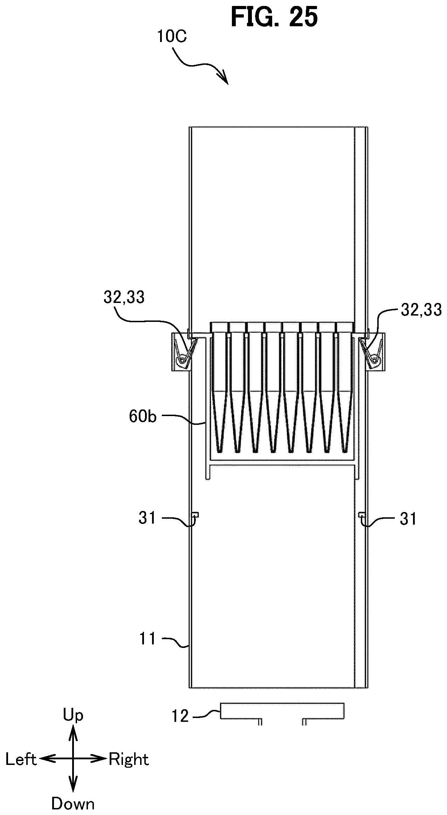

As shown in FIG. 25, the user inserts the container 60b into the insertion port 21 (FIG. 24) of the second stage from the top, and causes the movable holding part 32 to hold the container 60b.

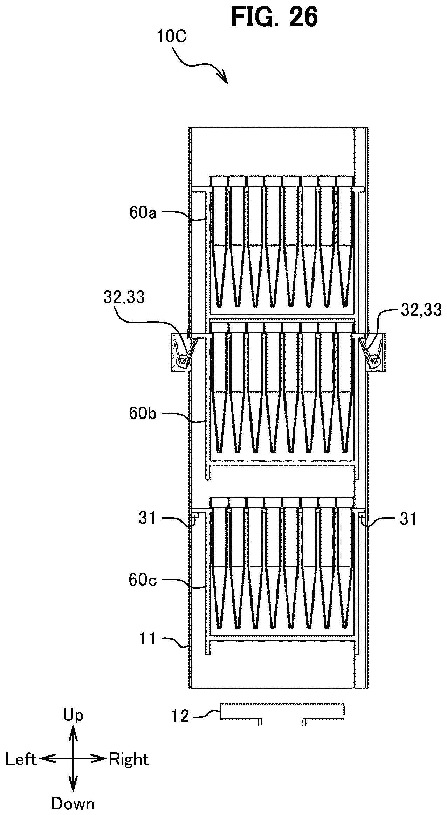

Next, as shown in FIG. 26, the user inserts the container 60a into the insertion port 21 of the first stage from the top (FIG. 24), and places the container 60a on the container 60b. Moreover, the user inserts the container 60c into the insertion port 21 of the first stage from the bottom (FIG. 24), and causes the fixed holding part 31 to hold the container 60c. Note that the order of insertion of the container 60a and the container 60c may be reversed.

Thereafter, when the user operates the operation unit 41 (FIG. 1) and instructs start of the lifting-lowering operation of the lift 12, the container installation apparatus 10C operates like the container installation apparatus 10 of the embodiment 1.

When the container 60a is stacked on the already-installed container 60b in the container installation apparatus 10C, in the container installation apparatus 10C, the insertion port guide part 22 provided in the insertion port 21 can guide the insertion of the container 60a such that the container 60a is placed on the container 60b while avoiding the mixing prevention part of foreign object 72 of the container 60b.

Moreover, in cases such as the case where urgent inspection is to be performed even though this inspection disrupts the chronological order of the containers 60 to be used, in the container installation apparatus 10C, a container 60 (for example, the container 60c) can be made to cut in and stacked on another container 60 (for example, the container 60b) already installed on the movable holding part 32.

The container installation apparatus 10C as described above can achieve to prevent a foreign object from being mixed and to improve the use order of the containers 60 like the container installation apparatus 10 according to the embodiment 1.

Moreover, since the movable holding part 32 of the upper stage is eliminated in the container installation apparatus 10C as described above, the container installation apparatus 10C can be produced at a lower cost than the container installation apparatus 10 according to the embodiment 1, by an amount corresponding to the elimination of the movable holding part 32. Furthermore, the container installation apparatus 10C as described above can be preferably used when an operation such as an urgent inspection in which an additionally-installed container 60 is used at top priority is performed and mismatch between the installation order and the use order is allowed.

Note that the present invention is not limited to the embodiments described above, and various changes and modifications can be made within a scope not departing from the spirit of the present invention.

For example, the above-mentioned embodiments are explained in detail to explain the spirit of the present invention in an easily understandable manner. Accordingly, the present invention is not necessarily limited to forms including all explained components. Moreover, in the present invention, different components may be added to certain components, and some of components may be changed to different components. Moreover, in the present invention, some of the components may be omitted.

### Reference Signs List

10, 10A, 10B, 10C container installation apparatus
11, 111, 111a, 111b installation section
12 lift
21 insertion port
22, 22a insertion port guide part
26 take-out port
30 holding part
31 fixed holding part
32 movable holding part
33, 133, 233 holding member
33a horizontal surface
33b restriction surface
34, 134 movable mechanism
34a hinge shaft (shaft part)
34b, 134b kick spring (biasing member)
35 insertion restriction part
41 operation unit
42 control unit
60, 60a, 60b, 60c, 160 container
61 housing part
61a bottom surface
62, 62a, 62b engagement part
63 leg part
63a installation surface
64 ceiling surface
65 notch part
71 housed object
72 mixing prevention part of foreign object
73 gap
133a plate part
133b shaft part
134a restriction member
233 holding member
234 solenoid (electric moving member)
235 container detection sensor

## Claims

1. A container installation apparatus comprising:
an installation section that installs a plurality of containers provided with engagement parts in at least left and right side surface portions inside thereof; and
a lift that lifts and lowers the containers inside the installation section, wherein
the installation section includes:
a plurality of insertion ports that are provided to be opened in a front surface portion and that are used to insert the containers into an inside of the installation section,
a take-out port that is provided to be opened in a ceiling portion and that is used to take out the containers from the inside of the installation section,
a holding part with a plurality of stages that is provided in left and right inner wall portions and that horizontally holds the container by engaging with the engagement parts of the container, and
an insertion port guide part that is provided to partially block the insertion port and that guides insertion of the container into the insertion port.

2. The container installation apparatus according to claim 1, wherein the insertion port guide part is provided on one of left and right sides of the insertion port.

3. The container installation apparatus according to claim 1, wherein a top side portion of the insertion port guide part is provided at a height position equivalent to that of a portion of the holding part that holds the container.

4. The container installation apparatus according to claim 1, wherein the holding part is arranged to protrude from the left and right inner wall portions of the installation section to the inside of the installation section.

5. The container installation apparatus according to claim 1, wherein the holding part with a bottom stage among the plurality of stages of the holding part is formed as a fixed holding part inside the installation section, while the holding part with a stage other than the bottom stage is formed as a movable holding part inside the installation section to be movable when the containers are lifted with lifting of the lift.

6. The container installation apparatus according to claim 5, wherein the movable holding part is configured to include:
a holding member that engages with the engagement part of the container,
a shaft part that supports the holding member such that the holding member is rotatable about the shaft part, and
a biasing member that biases the holding member in an inside direction of the container.

7. The container installation apparatus according to claim 1, wherein an interval of the plurality of stages of the holding part in a height direction is larger than a height of the container below the engagement part.

8. The container installation apparatus according to claim 1, wherein the installation section includes an insertion restriction part that restricts the containers from being inserted into the inside of the installation section in a wrong insertion direction.

9. The container installation apparatus according to claim 1, wherein the installation section is formed of a sheet-shaped member in a ] shape.

10. The container installation apparatus according to claim 1, wherein the installation section is formed of a rod-shaped member in a frame shape.

11. The container installation apparatus according to claim 5, wherein
the installation section includes a container detection sensor used to detect the container lifted inside the installation section, and
the movable holding part is configured to include:
a holding member that engages with the engagement part of the container, and
an electric moving member that causes the holding member to selectively advance into or retreat from an inner space inside the installation section.

12. A container that is installed inside a container installation apparatus with a plurality of the containers stacked one on top of another in an up-down direction, the container comprising:
a housing part that stores a housed object inside thereof,
an engagement part that is provided in at least left and right side surface portions and that is used to engage with a holding part provided in left and right inner wall portions of the container installation apparatus;
a mixing prevention part of foreign object that is provided in an upper portion and that is used to prevent a foreign object from being mixed into an inside; and
leg parts that are provided in a lower portion and that form a hollow space at an inside, wherein
a height of the hollow space is set to such a height that, when the plurality of containers are installed inside the container installation apparatus while being stacked one on top of another, a gap is formed between a bottom surface of the housing part of the upper container and a top portion of the mixing prevention part of foreign object in the lower container.

13. The container according to claim 12, wherein the engagement parts are provided to protrude from at least the left and right side surface portions of the container with varying in a protruding amount.
